(19) Europäisches Patentamt
European Patent Office
Office européen des brevets

(11) **EP 2 457 217 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(21) Anmeldenummer: **10736701.3**

(22) Anmeldetag: **23.07.2010**

(51) Int Cl.:
***G06T 7/00*** *(2006.01)*

(86) Internationale Anmeldenummer:
**PCT/EP2010/060686**

(87) Internationale Veröffentlichungsnummer:
**WO 2011/009933 (27.01.2011 Gazette 2011/04)**

(54) **VERFAHREN UND VORRICHTUNG ZUM ÜBERWACHEN EINES RAUMBEREICHS**

METHOD AND DEVICE FOR SURVEILLANCE OF AN AREA

PROCÉDÉ ET DISPOSITIF POUR LA SURVEILLANCE D'UNE ZONE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.07.2009 DE 102009035755**

(43) Veröffentlichungstag der Anmeldung:
**30.05.2012 Patentblatt 2012/22**

(73) Patentinhaber: **Pilz GmbH & Co. KG
73760 Ostfildern (DE)**

(72) Erfinder: **WIETFELD, Martin
73342 Bad Ditzenbach (DE)**

(74) Vertreter: **Witte, Weller & Partner
Königstrasse 5
70173 Stuttgart (DE)**

(56) Entgegenhaltungen:
**WO-A1-2007/085330      WO-A1-2008/098831
US-A1- 2005 207 618**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Überwachen eines Raumbereichs, der eine Struktur mit einer Vielzahl von zumindest weitgehend parallelen Kanten und eine Anzahl von beweglichen Objekten aufweist, mit den Schritten:

- Bereitstellen einer ersten und einer zweiten Bildaufnahmeeinheit, die mit einem definierten Abstand zueinander angeordnet sind,

- Aufnehmen eines ersten Bildes von dem Raumbereich mit der ersten Bildaufnahmeeinheit und Aufnehmen eines zweiten Bildes von dem Raumbereich mit der zweiten Bildaufnahmeeinheit,

- Bestimmen einer Anzahl von Objektpositionen anhand des ersten und des zweiten Bildes, wobei jede Objektposition eine räumliche Entfernung eines Objekts relativ zu den Bildaufnahmeeinheiten repräsentiert, und

- Erzeugen eines Schaltsignals in Abhängigkeit von den Objektpositionen.

Die Erfindung betrifft ferner eine Vorrichtung zum Überwachen eines Raumbereichs, der eine Struktur mit einer Vielzahl von zumindest weitgehend parallelen Kanten und eine Anzahl von beweglichen Objekten aufweist, mit einer ersten Bildaufnahmeeinheit zum Aufnehmen eines ersten Bildes von dem Raumbereich und mit einer zweiten Bildaufnahmeeinheit zum Aufnehmen eines zweiten Bildes von dem Raumbereich, wobei die erste und zweite Bildaufnahmeeinheit mit einem definierten Abstand zueinander angeordnet sind, und mit einer Auswerte- und Steuereinheit, die dazu ausgebildet ist, eine Anzahl von Objektpositionen anhand des ersten und des zweiten Bildes zu bestimmen und in Abhängigkeit von den Objektpositionen ein Schaltsignal zu erzeugen, wobei jede Objektposition eine räumliche Entfernung eines Objekts relativ zu den Bildaufnahmeeinheiten repräsentiert.

Ein solches Verfahren und eine solche Vorrichtung sind aus WO 2007/085330 A1 bekannt.

In EP 1 543 270 B1 sind ein Verfahren und eine Vorrichtung offenbart, die dazu dienen, den Gefahrenbereich einer automatisiert arbeitenden Maschine abzusichern. Die Vorrichtung besitzt zumindest zwei Bildaufnahmeeinheiten, die mit einem definierten Abstand zueinander angeordnet sind. Jede Bildaufnahmeeinheit liefert ein Bild des Raumbereichs, in dem die Maschine angeordnet ist. Die Bilder der beiden Bildaufnahmeeinheiten werden mit Hilfe von zumindest zwei verschiedenen Szenenanalyseverfahren ausgewertet, um ein dreidimensionales Abbild des überwachten Raumbereichs zu erhalten. Mit anderen Worten werden anhand der parallel aufgenommenen Bilder Positionen einzelner Objekte in dem Raumbereich bestimmt, wobei diese Positionen auch eine Entfernungsinformation beinhalten. Anschließend kann anhand von definierten Schutzbereichen oder Schutzräumen entschieden werden, ob sich ein Objekt, wie etwa eine Person, der automatisiert arbeitenden Maschine so weit genähert hat, dass eine Gefahr besteht. Gegebenenfalls wird die Maschine abgeschaltet oder mit reduzierter Geschwindigkeit betrieben.

Die Szenenanalyseverfahren und insbesondere die Bestimmung von Objektentfernungen basieren bei einer solchen Vorrichtung häufig darauf, dass Objekte und/oder Strukturen in jedem der beiden aufgenommenen Bilder identifiziert und einander zugeordnet werden. Da die beiden Bildaufnahmeeinheiten mit einem Abstand zueinander angeordnet sind, besitzt jede Bildaufnahmeeinheit einen anderen Blickwinkel. Gleiche Objekte und/oder Strukturen erscheinen in den beiden Bildern daher versetzt zueinander, wobei der relative Versatz eines Objektes in den beiden Bildern von dem definierten Abstand zwischen den Bildaufnahmeeinheiten und von der Entfernung des Objekts zu den Bildaufnahmeeinheiten abhängt. Bei bekanntem Abstand zwischen den Bildaufnahmeeinheiten kann folglich die Entfernung zu dem Objekt anhand der Bilder bestimmt werden. Das Funktionsprinzip entspricht in gewisser Weise dem menschlichen dreidimensionalen Sehen.

Praktische Erfahrungen der Anmelderin mit einer Vorrichtung dieser Art haben gezeigt, dass eine zuverlässige und genaue Entfernungsmessung mit diesem Prinzip sehr aufwändig und schwierig ist, wenn innerhalb des überwachten Raumbereichs Strukturen mit einer Vielzahl von zumindest weitgehend parallelen Kanten vorhanden sind. Solche Kanten können dreidimensionale Strukturen sein, wie etwa eine Treppe, ein Gitterzaun oder ein Lamellenvorhang, oder sie können zweidimensionale Strukturen sein, wie etwa ein Streifenmuster am Boden oder an einer Wand. Die parallelen Kanten erschweren die eindeutige Zuordnung einer Kante in den beiden aufgenommenen Bildern. Eine Fehlzuordnung, bei der verschiedene Kanten einander zugeordnet werden, führt in der Regel zu einer falschen Entfernungsmessung. Dies ist besonders problematisch, wenn die Vorrichtung und das Verfahren zum Absichern eines Gefahrenbereichs verwendet werden, wie etwa des Gefahrenbereichs einer automatisiert arbeitenden Maschine.

In DE 10 2005 063 217 A1 ist ein Verfahren zum Konfigurieren einer gattungsgemäßen Vorrichtung zum Überwachen eines Raumbereichs beschrieben. Die Konfiguration beinhaltet die Definition von Schutzräumen und/oder Schutzbereichen anhand von veränderbaren Geometrieelementen. In einem bevorzugten Ausführungsbeispiel werden die Geometrieelemente grafisch in bzw. über einem realen Bild des zu überwachenden Raumbereichs erzeugt. Das reale Abbild kann eine Anzahl von Referenzmarken beinhalten, mit deren Hilfe eine Konfigurationsebene definiert wird. Das veränderbare Geometrieelement wird dann relativ zu der Konfigurationsebene erzeugt, um einen eindeutigen Zusammenhang zwischen dem "virtuellen" Geometrieelement und dem realen Raumbereich zu schaffen. Fehlzuordnungen von parallelen Kanten und daraus folgenden Messfehler lassen sich mit dem bekannten Verfahren aber nicht vermeiden.

Die eingangs genannte WO 2007/085330 A1 offenbart ein Verfahren und eine Vorrichtung zum Überwachen des Arbeitsbereichs eines industriellen Roboters, wobei Bilder des Arbeitsbereichs während des Betriebs des Roboters wiederholt aufgenommen werden. In dem soweit überwachten Raumbereich sind am Boden zwei sichtbare, kreisbogenförmige Streifen angeordnet, die den potentiell gefährlichen Bereich in der Umgebung des Roboters markieren. Anhand der aufgenommenen Bilder wird entschieden, ob der Sicherheitslevel des Roboters aufgrund von detektierten Änderungen auf den markierten Linien geändert werden sollte.

WO 2008/098831 A1 offenbart ein weiteres Verfahren und eine weitere Vorrichtung zum Absichern des Arbeitsraums eines Roboters. Es wird ein dreidimensionales Bild von dem Arbeitsraum erstellt. Das dreidimensionale Bild wird analysiert, ob der Ist-Zustand des Arbeitsraums von einem Soll-Zustand des Arbeitsraums abweicht.

Vor diesem Hintergrund ist es eine Aufgabe der vorliegenden Erfindung, ein Verfahren und eine Vorrichtung der eingangs genannten Art anzugeben, die auf möglichst einfache und kostengünstige Weise eine zuverlässige Überwachung eines Raumbereichs auch dann ermöglichen, wenn in dem Raumbereich Strukturen mit weitgehend parallelen Kanten vorhanden sind. Es ist insbesondere eine Aufgabe, ein solches Verfahren und eine solche Vorrichtung anzugeben, die eine fehlersichere Absicherung des Gefahrenbereichs einer automatisiert arbeitenden Maschine ermöglichen, wenn in der Umgebung der Maschine Strukturen mit weitgehend parallelen Kanten vorhanden sind.

Gemäß einem Aspekt der Erfindung wird zur Lösung dieser Aufgabe ein Verfahren der eingangs genannten Art vorgeschlagen, wobei an der Struktur eine Anzahl von definierten Referenzmarken angeordnet wird, wobei eine Anzahl von Referenzentfernungen zwischen den Bildaufnahmeeinheiten und den Referenzmarken bestimmt wird, und wobei eine Strukturposition der Struktur anhand der Referenzentfernungen bestimmt wird.

Nach einem weiteren Aspekt der Erfindung wird eine Vorrichtung der eingangs genannten Art vorgeschlagen, wobei die Auswerte- und Steuereinheit ferner dazu ausgebildet ist, eine Strukturposition der Struktur anhand einer Anzahl von Referenzentfernungen zwischen den Bildaufnahmeeinheiten und definierten Referenzmarken zu bestimmen, die an der Struktur angeordnet sind.

Das neue Verfahren und die neue Vorrichtung werden vorteilhaft mit einem Computerprogramm mit Programmcode realisiert, der in der Auswerte- und Steuereinheit der zuvor genannten Vorrichtung ausgeführt wird.

Das neue Verfahren und die neue Vorrichtung verwenden definierte Referenzmarken, um die problematische Kantenstruktur gezielt zu markieren. Die Referenzmarken werden an der Struktur mit der Vielzahl von zumindest weitgehend parallelen Kanten angeordnet und vorzugsweise befestigt. Die Referenzmarken besitzen eine sichtbare Oberfläche mit hellen und/oder dunklen Bereichen, die sich von der Struktur und deren unmittelbarer Umgebung unterscheidet, so dass die Referenzmarken in den aufgenommenen Bildern eindeutig erkannt und einander zugeordnet werden können. In Beispielen sind die Referenzmarken Klebefolien, die am Rand und/oder an Ecken der Struktur mit den parallelen Kanten aufgeklebt werden. Generell ist es von Vorteil, wenn die Referenzmarken senkrecht zu ihrer sichtbaren Oberfläche sehr flach sind, d.h. papier- oder folienartig ausgebildet sind, so dass die Referenzentfernungen zwischen den Referenzmarken und den Bildaufnahmeeinheiten keinen oder allenfalls einen sehr geringen Unterschied zu den entsprechenden Entfernungen der Struktur im Bereich der Referenzmarken besitzen. Die Referenzmarken sind somit künstlich erzeugte Zielpunkte innerhalb der aufgenommenen Bilder, mit denen die Struktur markiert wird, um die Entfernungsmessung in Bezug auf die Struktur zu erleichtern. Mithilfe der Referenzmarken kann die Position der problematischen Struktur gewissermaßen über einen Umweg relativ einfach und zuverlässig bestimmt werden. Dies beinhaltet insbesondere die Bestimmung der Entfernung der Struktur relativ zu den Bildaufnahmeeinheiten. Die Referenzentfernungen werden zumindest übergangsweise als Entfernungsmesswerte für die Struktur verwendet.

Das neue Verfahren und die neue Vorrichtung lassen sich relativ einfach kostengünstig realisieren. Sie ermöglichen außerdem eine hohe Erkennungssicherheit und die Vermeidung oder zumindest Reduzierung von Fehlzuordnungen in den parallel aufgenommenen Bildern. Damit eignen sich das neue Verfahren und die neue Vorrichtung insbesondere für eine Verwendung zur Absicherung von Gefahrenbereichen. Die oben genannte Aufgabe ist daher vollständig gelöst.

In einer bevorzugten Ausgestaltung der Erfindung werden an der Struktur zumindest drei Referenzmarken angeordnet, die eine virtuelle Referenzfläche aufspannen, wobei die virtuelle Referenzfläche die Vielzahl der parallelen Kanten zumindest weitgehend überlagert. Dementsprechend ist die Auswerte- und Steuereinheit der neuen Vorrichtung dazu ausgebildet, eine virtuelle Referenzfläche anhand von zumindest drei Referenzmarken zu bestimmen, die an der Struktur angeordnet sind und eine Ebene aufspannen.

Diese Ausgestaltung besitzt den Vorteil, dass der überwiegende Teil oder gar sämtliche problematischen Kanten der Struktur markiert werden können, ohne die Struktur grundlegend zu verändern oder zu verdekken. Die virtuelle, in den Bildern "unsichtbare" Referenzfläche lässt sich mit Hilfe von zumindest drei, vorzugsweise zumindest vier Referenzmarken einfach und mit hoher Genauigkeit bestimmen. Des Weiteren kann auch die Position (einschließlich der Entfernung zu den Bildaufnahmeeinheiten) der virtuellen Referenzfläche einfach und mit hoher Genauigkeit anhand der parallel aufgenommenen Bilder bestimmt werden. Die Referenzfläche markiert somit den problematischen Kantenbereich, so dass dieser Bereich gezielt einer gesonderten Auswertung unterzogen werden kann. Auf diese Weise können die Detektionssicherheit und Zuverlässigkeit der neuen Vorrichtung und des neuen Verfahrens auf sehr effiziente Weise verbessert werden.

In einer weiteren Ausgestaltung wird für zumindest eine der parallelen Kanten eine Kantenentfernung relativ zu den Bildaufnahmeeinheiten anhand des ersten und zweiten Bildes sowie anhand der virtuellen Referenzfläche bestimmt. Vorzugsweise wird eine Kantenentfernung für mehrere und besonders bevorzugt für alle Kanten der Struktur bestimmt.

Diese Ausgestaltung liefert eine genaue Entfernungsinformation für die problematischen Kanten, indem zusätzlich zu den Bildinformationen und dem bekannten Abstand zwischen den Bildaufnahmeeinheiten die neu gewonnenen Informationen über Position und Entfernung der Referenzfläche ausgewertet wird. Andererseits werden die Entfernungsinformationen auf die tatsächlichen Bildinhalte zurückgeführt, d.h. die in den Bildern sichtbaren parallelen Kanten. Mit dieser Ausgestaltung kann man eine eindeutige und genaue Entfernungsinformation für alle problematischen Kanten erhalten. Die weitere Auswertung der Bilder, wie insbesondere die Überwachung von Schutzräumen, wird durch diese Ausgestaltung vereinfacht, weil problematische Kantenbereiche anhand der eindeutig bestimmten Entfernung wie "normale" bzw. unproblematische Bildbereiche verarbeitet werden können.

In einer weiteren Ausgestaltung wird für die zumindest eine Kante eine Kantenposition innerhalb des ersten und/oder zweiten Bildes bestimmt und dauerhaft gespeichert.

In dieser Ausgestaltung wird die Lage der zumindest einen Kante in den zweidimensionalen Bildern bestimmt und dauerhaft gespeichert. "Dauerhaft gespeichert" bedeutet, dass die Kantenposition zumindest für die gesamte Dauer eines ununterbrochenen Betriebes in einem Speicher der neuen Vorrichtung bereitgestellt wird. Bevorzugt wird die Kantenposition in einem nichtflüchtigen Speicher der Vorrichtung gespeichert, so dass die Kantenposition auch nach einer Unterbrechung der Stromversorgung auslesbar ist. Die Ausgestaltung besitzt den Vorteil, dass der problematische Kantenbereich in einem Überwachungsbetrieb, in dem zyklisch wiederholt erste und zweite Bilder aufgenommen werden, jeweils sehr einfach und schnell in den aufgenommenen Bildern identifiziert werden kann. Die Auswertung eines neuen Bildpaares im zyklischen Überwachungsbetrieb vereinfacht sich, so dass diese Ausgestaltung zu einem kostengünstig realisierbaren Echtzeitbetrieb beiträgt.

In einer weiteren Ausgestaltung wird auch die Kantenentfernung für die zumindest eine Kante dauerhaft gespeichert.

Diese Ausgestaltung trägt weiter dazu bei, einen Überwachungsbetrieb in Echtzeit unter Berücksichtigung der problematischen Kantenstruktur auf einfache und kostengünstige Weise zu ermöglichen. Die eindeutig bestimmte und gespeicherte Kantenentfernung kann vorteilhaft bei der Auswertung jedes neuen Bildpaars zur Verifikation eines aktuell erhaltenen Messwertes und/oder anstelle eines aktuellen Messwertes verwendet werden.

In einer weiteren Ausgestaltung werden das erste und das zweite Bild zyklisch wiederholt aufgenommen, und die Objektpositionen werden zyklisch wiederholt bestimmt, wobei die Strukturposition anhand der gespeicherten Kantenentfernung bestimmt wird. Besonders vorteilhaft ist es, wenn die gespeicherte Kantenentfernung, die insbesondere in einem gesonderten Konfigurationsmodus bestimmt wurde, dauerhaft gespeichert und für jedes neue Bildpaar als aktuelle Kantenentfernung verwendet wird.

In dieser Ausgestaltung ersetzt die einmal bestimmte Kantenentfernung nachfolgende "Messwerte" der Kantenentfernung in den zyklisch wiederholt aufgenommenen Bilder. Mit anderen Worten wird die Entfernung der Kanten trotz der zyklisch wiederholten Bildaufnahmen nur einmal bestimmt und dann dauerhaft verwendet. Vorteilhafterweise wird diese Ausgestaltung nur bei Strukturen angewendet, die räumlich stationär bzw. unbewegt sind. Demgegenüber werden für alle anderen Objekte in dem Raumbereich einschließlich vorhandener Begrenzungsflächen ohne parallele Kanten jeweils aktuelle Entfernungen bestimmt. Die Ausgestaltung besitzt den Vorteil, dass für den problematischen Kantenbereich korrekte "Messwerte" auf sehr effiziente Weise zur Verfügung gestellt werden. Fehlalarme und damit verbundene Produktionsunterbrechungen beim Überwachen einer gefährlichen Maschine werden einfacher Weise vermieden. Andererseits trägt diese Ausgestaltung zu einer hohen Detektionssicherheit bei, da Objekte im Vordergrund der Struktur stets eine geringere Entfernung zu den Bildaufnahmeeinheiten besitzen müssen und infolgedessen anhand der unterschiedlichen Entfernungen leichter verifiziert werden können.

In einer weiteren Ausgestaltung verbleibt zumindest eine der Referenzmarken dauerhaft an der Struktur. Besonders bevorzugt ist es, wenn die gespeicherte Kantenentfernung in Abhängigkeit von der dauerhaft angeordneten Referenzmarke übernommen wird, insbesondere nur dann, wenn die zumindest eine Referenzmarke an ihrer ursprünglich bestimmten Position bzw. mit ihrer ursprünglich bestimmten Referenzentfernung detektiert wird.

Mit dieser Ausgestaltung wird eine noch höhere Fehlersicherheit beim Absichern einer Maschine erreicht, da eine gespeicherte Kantenentfernung im laufenden Überwachungsbetrieb nur dann als "aktueller Messwert" verwendet wird, wenn anhand der zumindest einen verbliebenen Referenzmarke festgestellt wurde, dass die Struktur ihre Entfernung und Position relativ zu den Bildaufnahmeeinheiten nicht verändert hat.

In einer weiteren Ausgestaltung wird die Objektposition eines beweglichen Objekts anhand der Strukturposition der Struktur verifiziert. Von Vorteil ist es, wenn die gespeicherte Kantenentfernung in diesem Fall die Strukturposition der Struktur repräsentiert, so dass die Objektposition eines beweglichen Objekts anhand der zumindest einen Kantenentfernung verifiziert wird.

In dieser Ausgestaltung findet eine Plausibilitätsprüfung statt, mit deren Hilfe geprüft wird, ob die gemessene Objektposition eines detektierten beweglichen Objekts innerhalb des verfügbaren Raumbereichs liegt. Wenn die Kantenstruktur bspw. ein Gitter oder ein Streifenmuster am Boden des Raumbereichs ist, muss die Objektentfernung zu einem beweglichen Objekt kleiner sein als die Kantenentfernung. Mit anderen Worten befindet sich das bewegliche Objekt im Vordergrund, während die Struktur mit den parallelen Kanten einen Hintergrund darstellt. Eine solche Plausibilitätsprüfung trägt zu einer noch höheren Fehlersicherheit bei der Überwachung eines Raumbereichs und zu einer geringeren Fehlalarmrate bei.

In einer weiteren Ausgestaltung ist die Struktur räumlich stationär.

Diese Ausgestaltung ermöglicht eine sehr einfache und effiziente Realisierung des neuen Verfahrens, insbesondere wenn die einmal bestimmten Kantenentfernungen im laufenden Überwachungsbetrieb anstelle von aktuellen Messwerten verwendet werden sollen. Andererseits betrifft diese Ausgestaltung einen Anwendungsfall, der in der Praxis sehr häufig vorkommt, weil Strukturen mit parallelen Kanten häufig die Folge von Absperrgittern, Hintergrundmarkierungen und/oder anderen baulichen Maßnahmen sind. Die Ausgestaltung ermöglicht auf sehr effiziente Weise eine hohe Detektionssicherheit beim Überwachen eines Raumbereichs, in dem parallele Kanten eine eindeutige Zuordnung in den parallel aufgenommenen Bildern erschweren.

Ausführungsbeispiele der Erfindung sind in der Zeichnung dargestellt und werden in der nachfolgenden Beschreibung näher erläutert. Es zeigen:

Fig. 1    eine schematische Darstellung eines Ausführungsbeispiels der neuen Vorrichtung,

Fig. 2    die Vorrichtung aus Fig. 1 (in Teilen) in einer Draufsicht,

Fig. 3    eine vereinfachte Darstellung eines ersten Bildes von einem überwachten Raumbereich

Fig. 4    eine vereinfachte Darstellung eines zweiten Bildes von dem Raumbereich,

Fig. 5    ein weiteres Bild von dem Raumbereich, wobei hier definierte Referenzmarken an einer Struktur mit parallelen Kanten angeordnet sind,

Fig. 6    ein weiteres Bild von dem Raumbereich mit einer Person,

Fig. 7    ein Flussdiagramm zur Erläuterung eines Ausführungsbeispiels des neuen Verfahrens, und

Fig. 8    ein weiteres Flussdiagramm zur Erläuterung eines Ausführungsbeispiels des neuen Verfahrens.

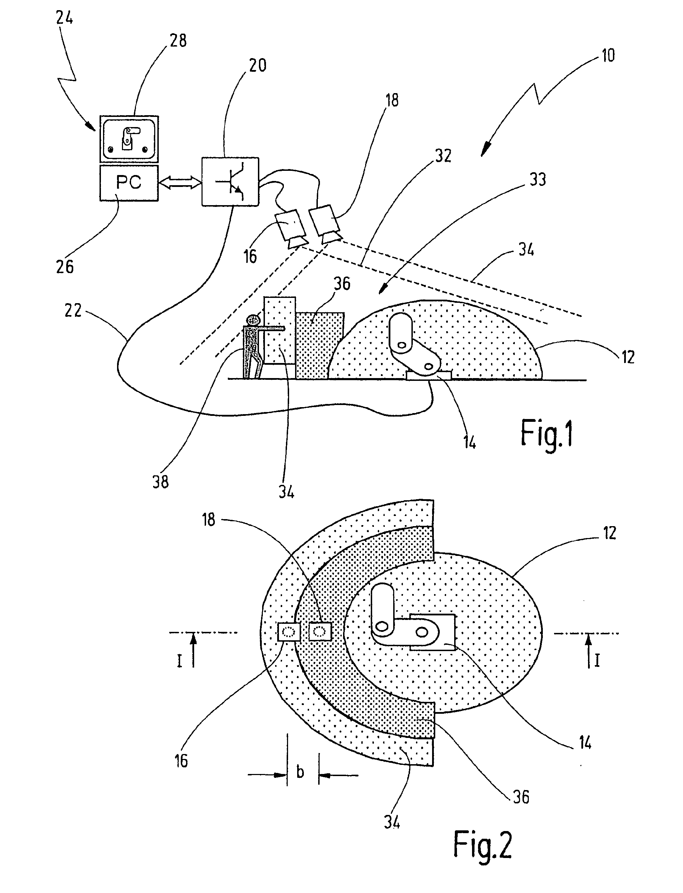

In Fig. 1 ist ein Ausführungsbeispiel der neuen Vorrichtung in seiner Gesamtheit mit der Bezugsziffer 10 bezeichnet. Die Vorrichtung 10 dient hier zum Absichern des Arbeitsbereichs 12 eines Roboters 14. Der Roboter 14 ist eine automatisiert arbeitende Maschine, die aufgrund ihrer Bewegungen eine Gefahr für Personen darstellt, die in den Arbeitsbereich 12 eintreten. Wenngleich es sich um ein bevorzugtes Ausführungsbeispiel handelt, sind die neue Vorrichtung und das neue Verfahren nicht auf die Absicherung von Maschinen beschränkt. Sie können auch zur Überwachung von Raumbereichen aus anderen Gründen eingesetzt werden, etwa zur Überwachung eines Tresorraums.

Die Vorrichtung 10 besitzt zwei Bildaufnahmeeinheiten 16, 18, die in einem definierten und bekannten Abstand b zueinander angeordnet sind (siehe Fig. 2). In Beispielen besitzt die Vorrichtung 10 eine dritte Bildaufnahmeeinheit (hier nicht dargestellt), wobei jeweils zwei Bildaufnahmeeinheiten mit dem definierten und bekannten Abstand b zueinander angeordnet sind und wobei die drei Bildaufnahmeeinheiten L-förmig zueinander angeordnet sind. Die drei Bildaufnahmeeinheiten bilden in diesem Fall zwei Paare von Bildaufnahmeeinheiten, wobei im Folgenden der Einfachheit halber nur ein Paar mit den Bildaufnahmeeinheiten 16, 18 beschrieben wird. Eine L-förmige Anordnung von zumindest drei Bildaufnahmeeinheiten gewährleistet, dass Kanten mit beliebigen Verlaufsrichtungen von zumindest einem der Paare erkannt und ausgewertet werden können.

Die Vorrichtung 10 besitzt ferner eine Auswerte- und Steuereinheit 20, die mit den Bildaufnahmeeinheiten 16, 18 verbunden ist. Die Auswerte- und Steuereinheit 20 steuert die Bildaufnahme mit den Bildaufnahmeeinheiten 16, 18 und sie wertet die aufgenommenen Bilder aus, um in Abhängigkeit von den Bildern den Roboter 14 anzusteuern.

Prinzipiell kann die Auswerte- und Steuereinheit 20 Teil einer Betriebssteuerung des Roboters 14 sein, in einigen Ausführungsbeispielen ist die Auswerte- und Steuereinheit 20 jedoch eine separate Sicherheitssteuerung, die der Absicherung des gefährlichen Arbeitsbereichs 12 dient. Die Betriebssteuerung (hier nicht dargestellt) des Roboters 14 ist dann separat realisiert. Die Auswerte- und Steuereinheit 20 ist in der Lage, in Abhängigkeit von den Bildern der Bildaufnahmeeinheiten 16, 18 ein Schaltsignal zu erzeugen, mit dem der Roboter 14 in einen Betrieb mit reduzierter Geschwindigkeit oder vollständig abgeschaltet werden kann. Bei der Bezugsziffer 22 ist eine Verbindungsleitung dargestellt, über die die Auswerte- und Steuereinheit 20 das Schaltsignal an den Roboter 14 überträgt. Das Schaltsignal kann ein Abschaltsignal, ein Steuersignal, ein Freigabesignal und/ oder ein Warnsignal beinhalten.

Mit der Bezugsziffer 24 ist ein Konfigurationsgerät bezeichnet, das zum Konfigurieren der Vorrichtung 10 dient. In Beispielen beinhaltet das Konfigurationsgerät 24 einen PC 26 und eine Anzeige 28. Die Anzeige 28 dient unter anderem dazu, Bilder anzuzeigen, die mit den Bildaufnahmeeinheiten 16, 18 aufgenommen wurden. Die Anzeige dieser Bilder wird jedoch in erster Linie zum Konfigurieren und/oder Überprüfen der Vorrichtung 10 benötigt. Im normalen Arbeitsbetrieb arbeitet die Vorrichtung 10 vorzugsweise vollautomatisch, das heißt die Auswerte- und Steuereinheit 20 erzeugt das Schaltsignal 22 in Abhängigkeit von den Bildern der Bildaufnahmeeinheiten 16, 18, ohne dass die Bilder auf der Anzeige 28 angezeigt werden müssen. Der PC 26 und die Auswerte- und Steuereinheit 20 sind zur Übertragung von Daten und Bildern über eine bidirektionale Datenverbindung verbunden, die in Fig. 1 mit einem Doppelpfeil angedeutet ist.

Mit den Bezugsziffern 32, 34 sind die Aufnahmebereiche der Bildaufnahmeeinheiten 16, 18 dargestellt. Wie leicht einzusehen ist, sind die Aufnahmebereiche 32, 34 etwas versetzt zueinander. Es gibt jedoch einen gemeinsamen oder überlappenden Aufnahmebereich 33, der den zu überwachenden Raumbereich definiert und in dem hier der Arbeitsbereich 12 liegt. Die Auswerte- und Steuereinheit 20 ist nur innerhalb des gemeinsamen Aufnahmebereichs 33 in der Lage, Entfernungen zwischen den Bildaufnahmeeinheiten 16, 18 und Objekten in der nachfolgend beschriebenen Weise zu bestimmen.

Mit der Bezugsziffer 34 ist eine Warnzone bezeichnet, mit der Bezugsziffer 36 ist eine Abschaltzone bezeichnet. Die Warnzone 34 und die Abschaltzone 36 sind Überwachungsbereiche, die sich zumindest teilweise um den Arbeitsbereich 12 des Roboters 14 herum erstrecken. Die Überwachungsbereiche 34, 36 sind virtuelle Schutzzäune, die mithilfe des Konfigurationsgerätes 24 definiert werden können. Wenn ein bewegtes Objekt, wie eine Person 38, in die Warnzone 34 und/oder die Abschaltzone 36 eintritt, wird dies mithilfe der Vorrichtung 10 erkannt und die Auswerte- und Steuereinheit 20 erzeugt das Schaltsignal 22 für den Roboter 14. Tritt die Person 38 in die Warnzone 34 ein, erzeugt die Auswerte- und Steuereinheit 20 bspw. ein Schaltsignal, das dazu führt, dass der Roboter 14 mit einer reduzierten Geschwindigkeit arbeitet. Außerdem kann ein akustisches und/oder optisches Warnsignal erzeugt werden. Tritt die Person 38 trotz dieser Maßnahmen in die Abschaltzone 36 ein, erzeugt die Auswerte- und Steuereinheit 20 ein weiteres Schaltsignal, das den Roboter 14 stillsetzt.

Um das Eindringen einer Person 38 oder eines anderen beweglichen Objekts in eine der Zonen 34, 36 zu detektieren, bestimmt die Auswerte- und Steuereinheit 20 in Abhängigkeit von den Bildern der Bildaufnahmeeinheiten 16, 18 ein dreidimensionales Abbild des gesamten Aufnahmebereichs 33. Das dreidimensionale Abbild beinhaltet Entfernungsinformationen, die eine Entfernung zwischen den Bildaufnahmeeinheiten 16, 18 und einzelnen Objekten und Strukturen innerhalb des gemeinsamen Aufnahmebereichs 33 repräsentieren. Die Warn- und Abschaltzonen 34, 36 sind anhand von Koordinaten innerhalb des dreidimensionalen Abbildes definiert, so dass das Eintreten einer Person 38 in eine der Zonen allein anhand der Bilddaten von den Bildaufnahmeeinheiten 16, 18 detektiert werden kann. Ein vorteilhaftes Verfahren zum Konfigurieren der Warn- und Abschaltzonen 34, 36 ist in der eingangs genannten DE 10 2005 063 217 A1 beschrieben.

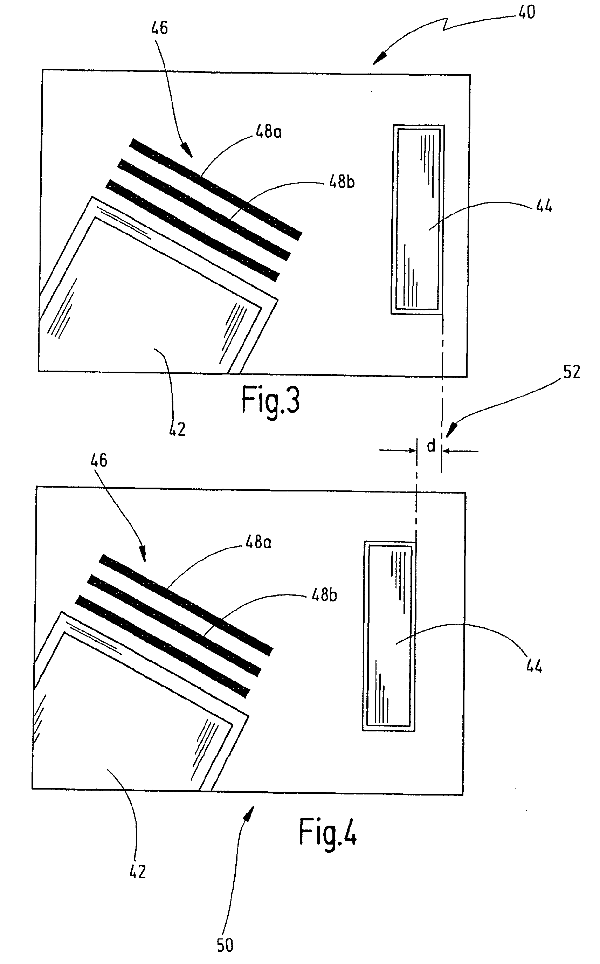

Ein bevorzugtes Verfahren zum Bestimmen der Entfernungsinformationen wird nachfolgend anhand der Figuren 3 und 4 kurz erläutert. Fig. 3 zeigt beispielhaft und in einer vereinfachten Darstellung ein erstes Bild 40 des überwachten Raumbereichs, das mit der ersten Bildaufnahmeeinheit 16 aufgenommen wurde. Das Bild 40 zeigt hier beispielhaft eine Maschine 42 und einen Schaltschrank 44. Außerdem ist vor der Maschine 42 eine Struktur 46 mit einer Vielzahl von weitgehend parallelen Kanten 48 dargestellt. Die Struktur 46 könnte bspw. ein Streifenmuster mit hellen und dunklen Streifen sein, das auf dem Boden vor der Maschine 42 angeordnet ist. Des weiteren könnte die Struktur 46 ein Gitter sein, das vor der Maschine 42 angeordnet ist, bspw. mit Ablaufkanälen für Flüssigkeiten. Weitere Beispiele für Strukturen 46 mit parallelen oder zumindest weitgehend parallelen Kanten können Gitterzäune oder treppenartige dreidimensionale Strukturen sein.

Fig. 4 zeigt ein zweites Bild 50, das mit der zweiten Bildaufnahmeeinheit 18 aufgenommen wurde. Das zweite Bild 50 zeigt denselben Raumbereich wie das erste Bild 40. Beispielsweise werden das erste und zweite Bild synchron und weitgehend zeitgleich zueinander aufgenommen. Grundsätzlich ist jedoch auch eine zeitversetzte Aufnahme der Bilder 40, 50 denkbar, sofern der Zeitversatz zwischen den beiden Bildaufnehmen so gering ist, dass nur eine geringe Positionsänderung von beweglichen Objekten in dem gemeinsamen Aufnahmebereich 33 auftreten kann.

Wie anhand der Figuren 3 und 4 dargestellt ist, zeigen das erste Bild 40 und das zweite Bild 50 dieselbe Szene. Allerdings erscheinen die Objekte und Strukturen 42, 44, 46 in den beiden Bildern 40, 50 versetzt zueinander, wie dies bei Bezugsziffer 52 dargestellt ist. Der Versatz d ist eine Folge der versetzten Aufnahmebereiche 30, 32 der beiden Bildaufnahmeeinheiten 16, 18.

Bevorzugt besitzen die beiden Bildaufnahmeeinheiten 16, 18 parallele optische Achsen und die beiden Bildaufnahmeeinheiten 16, 18 sind zumindest weitgehend identisch. Für diesen Fall gilt die Beziehung:

$$r = b \cdot f/d,$$

wobei f die Brennweite der Bildaufnahmeeinheiten ist, b der Abstand (die so genannte Basis) zwischen den beiden Bildaufnahmeeinheiten 16, 18 ist, r die Entfernung eines Objekts oder einer Strukturkante von dem gemeinsamen Bezugspunkt der Bildaufnahmeeinheiten 16, 18 ist, und d die so genannte Disparität ist, d.h. der Versatz 52 in den beiden Bildern. Bei bekannter Basis b und bekannter Brennweite f kann anhand der gemessenen Disparitäten die jeweilige Entfernung r einer Objekt- oder Strukturkante zu den Bildaufnahmeeinheiten bestimmt werden.

Eine Voraussetzung für die Bestimmung der Entfernung r ist allerdings, dass die einander entsprechenden Struktur- oder Objektkanten in den beiden Bildern 40, 50 eindeutig identifiziert und einander zugeordnet werden können, um die jeweilige Disparität d zu bestimmen. Die Zuordnung von einander entsprechenden Kanten ist im Fall von Strukturen 46 mit einer Vielzahl von parallelen Kanten 48a, 48b schwierig und fehlerträchtig, insbesondere wenn eine große Anzahl an parallelen und gleich aussehenden Kanten existiert. Eine falsche Kantenzuordnung führt zu einer falschen Entfernungsinformation.

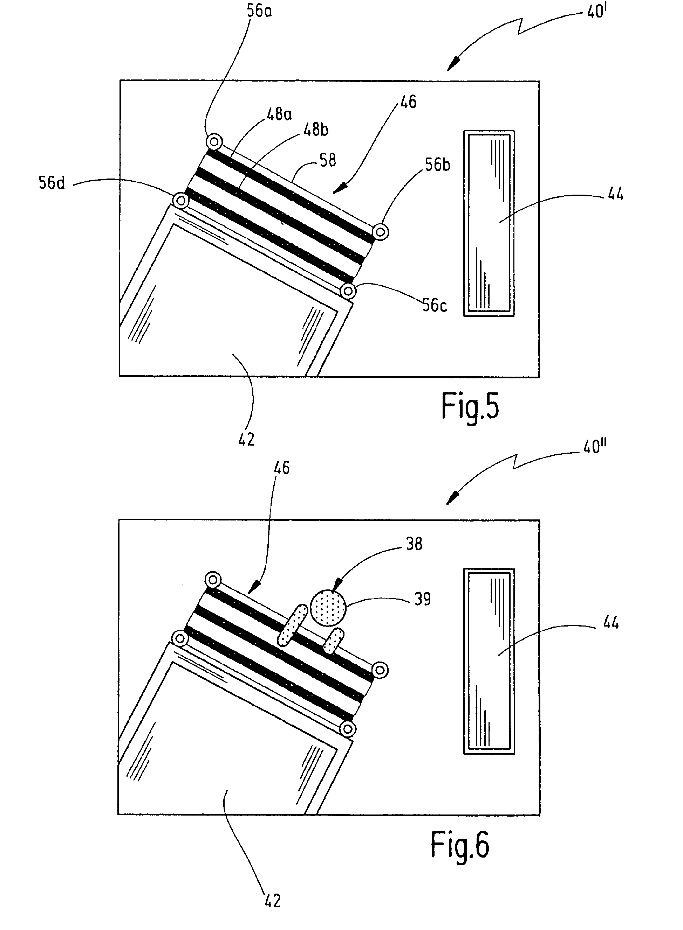

Fig. 5 zeigt ein erstes Bild 40', in dem vier Referenzmarken 56a, 56b, 56c, 56d an den Ecken der Struktur 46 angeordnet wurden. In Beispielen sind die Referenzmarken 56 punkt- oder kreisförmige Folienstücke, die ein definiertes Hell-Dunkel-Muster aufweisen. Des Weiteren ist es von Vorteil, wenn die Referenzmarken an der Struktur 46 befestigt werden, bspw. aufgeklebt werden.

Wie in Fig. 5 dargestellt ist, bildet jede Referenzmarke 56 einen definierten Zielpunkt innerhalb der Bilder, wobei hier der Einfachheit halber nur das erste Bild 40' dargestellt ist. Die Referenzmarken 56 können in den aufgenommenen Bildern anhand ihrer bekannten und/oder kontrastreichen Merkmale einfach identifiziert und einander zugeordnet werden. Anhand der jeweiligen Disparität kann die Entfernung r zwischen den Bildaufnahmeeinheiten 16, 18 und den einzelnen Referenzmarken 56a, 56b, 56c, 56d bestimmt werden.

Wie man in Fig. 5 weiter erkennen kann, spannen die Referenzmarken 56a, 56b, 56c, 56d eine virtuelle Referenzfläche 58 auf, die die Struktur 46 hier kongruent überlagert. Da die Entfernungen der einzelnen Referenzmarken 56a, 56b, 56c, 56d genau bestimmt werden können, kann auch die Lage und Entfernung der virtuellen Referenzfläche 58 anhand der aufgenommenen Bilder genau bestimmt werden. In Beispielen werden die Disparitäten und Entfernungen der einzelnen parallelen Kanten 48a, 48b in Abhängigkeit von diesen Daten bestimmt und den jeweiligen Kanten 48a, 48b zugeordnet.

Für die Bestimmung der Disparitäten der parallelen Kanten 48a, 48b ist von Vorteil, dass sich die Disparitäten der Kanten innerhalb der (nun bekannten) Referenzfläche proportional ändern. Mithilfe dieser Zusatzinformation kann zu jeder Kante 48a, 48b im ersten Bild 40' die jeweils korrespondierende Kante im zweiten Bild eindeutig zugeordnet werden. Auf diese Weise können die Disparitäten und Entfernungen aller Kanten 48a, 48b eindeutig und fehlerfrei bestimmt werden.

Fig. 6 zeigt ein weiteres Bild 40" der ersten Bildaufnahmeeinheit 16, wobei sich nun die Person 38 der Maschine 42 nähert. Die Person 38 muss sich vor der Struktur 46 befinden, die einen Hintergrund bildet. Um die Entfernung der Person 38 bestimmen zu können, müssen Umrisskanten 39 der Person in den parallelen Bildern detektiert und einander zugeordnet werden, um die Disparitäten zu bestimmen. Sollte sich anhand der Disparitäten zu den Umrisskanten 39 ergeben, dass die Person 38 weiter entfernt ist als die Kantenstruktur 46, liegt offensichtlich eine falsche Kantenzuordnung in Bezug auf die Umrisskante 39 vor. Vorzugsweise wird die Kantenzuordnung in Bezug auf die Umrisskante 39 dann korrigiert und die Disparitäten werden mit den korrigierten Kantenzuordnungen bestimmt. Wenn die Entfernung zu der Person nun kleiner ist als zu der Struktur 46, wird die korrigierte Messung als gültige Messung akzeptiert. Nur wenn keine Kantenzuordnung möglich ist, die eine gültige Messung ergibt, wird der Roboter abgeschaltet. Andernfalls wird die als plausibel akzeptierte Entfernung für die weitere Auswertung verwendet. Somit kann die Entfernung zu der Umrisskante 39 und damit die dreidimensionale Position der Person 38 innerhalb des überwachten Raumbereichs trotz der parallelen Kanten auf effiziente und zuverlässige Weise bestimmt werden.

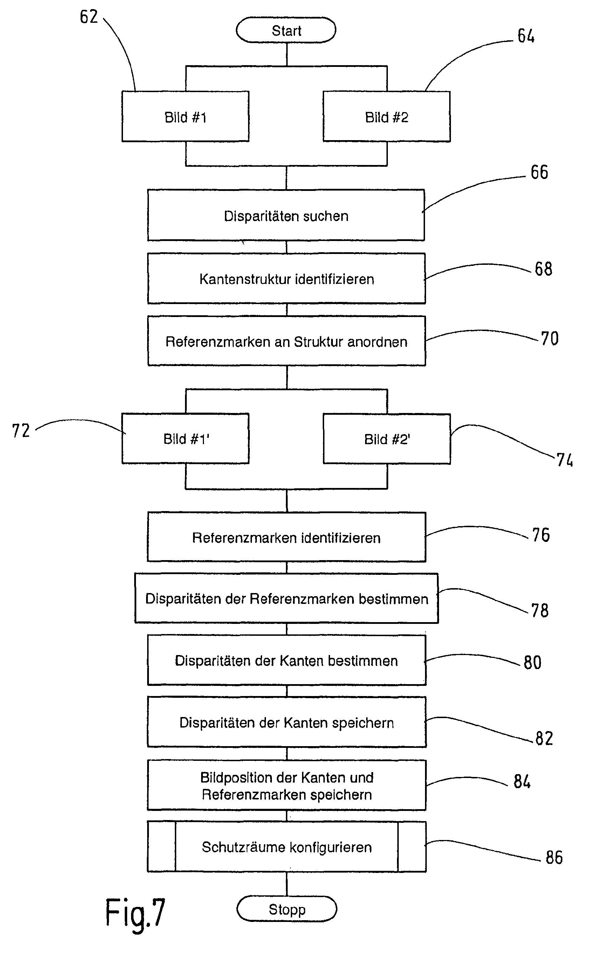

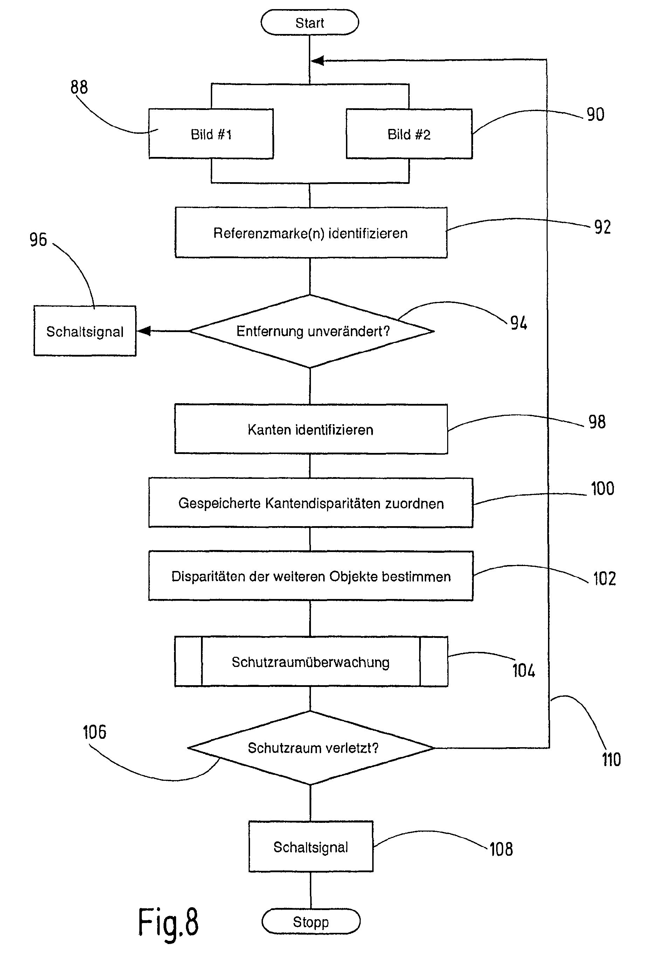

Die Figuren 7 und 8 zeigen anhand zweier Flussdiagramme ein Beispiel des neuen Verfahrens. Fig. 7 zeigt einen Konfigurationsmodus, mit dem die Vorrichtung 10 vor Beginn des eigentlichen Überwachungsbetriebs konfiguriert wird. In den Schritten 62 und 64 erfolgt - vorzugsweise synchron - die Aufnahme der Bilder 40, 50 mit den Bildaufnahmeeinheiten 16, 18. Gemäß Schritt 66 werden die Disparitäten zu den diversen Objekt- und Strukturkanten in den Bildern gesucht. Diese Suche beinhaltet die Identifikation und Zuordnung von einander entsprechenden Objekt- und Strukturkanten. Anschließend werden gemäß Schritt 68 Strukturen identifiziert, bei denen die Bestimmung der Disparitäten wegen fehlender Zuordnung nur schwer oder gar nicht möglich ist. In den Beispielen gemäß den Figuren 3 bis 6 betrifft dies die Struktur 46.

Gemäß Schritt 70 werden Referenzmarken 56 an der identifizierten Struktur angeordnet. Gemäß den Schritten 72 und 74 wird ein weiteres Bildpaar mit den Bildaufnahmeeinheiten 16, 18 aufgenommen. Anschließend werden gemäß Schritt 76 die Referenzmarken in den weiteren Bildern identifiziert. Gemäß Schritt 78 werden die Disparitäten der Referenzmarken bestimmt. Mithilfe der Disparitäten der Referenzmarken wird die virtuelle Referenzfläche 58 bestimmt. Anschließend werden gemäß Schritt 80 die Disparitäten der einzelnen Kanten 48a, 48b der Struktur 46 bestimmt, wobei die nunmehr bekannte Lage der Referenzfläche 58 und die bekannten Disparitäten der Referenzmarken 56 verwendet werden, um eine eindeutige Zuordnung der jeweils korrespondierenden Kanten 48a, 48b in den beiden Bildern zu erhalten. Gemäß Schritt 82 werden die Disparitäten der einzelnen Kanten 48a, 48b dauerhaft gespeichert. Außerdem werden gemäß Schritt 84 die Bildpositionen der einzelnen Kanten 48a, 48b sowie die Bildpositionen der Referenzmarken 56 gespeichert. Dabei bezeichnet "Bildposition" die Position der Kanten und Referenzmarken innerhalb der zweidimensionalen Bilder der Bildaufnahmeeinheiten 16, 18. Anschließend können gemäß Schritt 86 einzelne Schutzräume, wie etwa die Warnzone 34 oder die Abschaltzone 36 konfiguriert werden. Bevorzugt erfolgt die Konfiguration der Schutzräume nach dem Verfahren, das in der eingangs genannten DE 10 2005 063 217 A1 beschrieben ist. Dann kann die Vorrichtung 10 kann in den Überwachungsmodus gebracht werden, der anhand Fig. 8 erläutert wird.

Gemäß den Schritten 88 und 90 in Fig. 8 wird auch im Überwachungsbetrieb ein Bildpaar mit den Bildaufnahmeeinheiten 16, 18 aufgenommen. Anschließend werden die Referenzmarken 56 gemäß Schritt 92 in den aufgenommenen Bildern identifiziert. Außerdem werden die Entfernungen und Positionen der Referenzmarken 56 anhand der Disparitäten bestimmt.

Gemäß Schritt 94 wird geprüft, ob die Entfernungen bzw. Positionen der Referenzmarken 56 gegenüber den gespeicherten Entfernungs- und Positionsinformationen für die Referenzmarken unverändert sind. Falls dies nicht der Fall ist, wird gemäß Schritt 96 ein Schaltsignal erzeugt, das in den bevorzugten Ausführungsbeispielen ein Abschaltsignal zum Abschalten des Roboters bzw. der überwachten Maschine beinhaltet. Alternativ hierzu kann das Schaltsignal eine aktuelle Disparitätsbestimmung im Bereich der Referenzmarken und/oder der Kantenstruktur bewirken, wobei die Maschine nur abgeschaltet wird, wenn sich bei der aktuellen Disparitätsbestimmung keine plausiblen Entfernungswerte ergeben.

Ist die Position der Referenzmarken unverändert im Vergleich mit den im Konfigurationsmodus erhaltenen Daten, wird der Überwachungsbetrieb fortgesetzt. Gemäß Schritt 98 werden die parallelen Kanten der Struktur 46 anhand der gespeicherten Bildpositionen identifiziert. Gemäß Schritt 100 werden den identifizierten Kanten 48a, 48b die gespeicherten Kantendisparitäten zugeordnet. Mit anderen Worten verzichtet das bevorzugte Ausführungsbeispiel des neuen Verfahrens darauf, die Disparitäten und Entfernungen der parallelen Kanten 48a, 48b im Überwachungsbetrieb jeweils aktuell zu bestimmen. Vielmehr treten die im Konfigurationsmodus bestimmten und gespeicherten Kantendisparitäten an die Stelle von aktuellen Messwerten.

Gemäß Schritt 102 werden anschließend die Disparitäten für alle weiteren Objektkanten bestimmt. Gemäß Schritt 104 erfolgt dann die Schutzraumüberwachung, d.h. es wird ausgewertet, ob eine Person oder ein anderes Objekt einen der definierten Schutzräume 34, 36 betreten hat. Wird gemäß Schritt 106 eine Schutzraumverletzung festgestellt, wird im Schritt 108 ein Signal erzeugt, das wiederum ein Abschaltsignal zum Abschalten der überwachten Maschine beinhalten kann. Liegt keine Schutzraumverletzung vor, kehrt das Verfahren gemäß Schleife 110 zur Bildaufnahme in den Schritten 88, 90 zurück. Im Überwachungsmodus wird das Verfahren gemäß Fig. 8 also zyklisch wiederholt.

Insgesamt dienen das neue Verfahren und die neue Vorrichtung dazu, eine Fehlzuordnung an parallelen Kanten in stereoskopisch aufgenommenen Bildern zu verhindern, indem mithilfe von definierten Referenzmarken, wie etwa künstlichen Ringmustern, eine korrekte Disparitäts- und Entfernungsbestimmung für die parallelen Kanten erfolgt. Die Disparitäten und/oder Entfernungen für die parallelen Kanten werden vorteilhafterweise in einem Speicher der Auswerte- und Steuereinheit dauerhaft gespeichert und im späteren Überwachungsbetrieb den problematischen Kanten zugeordnet. Bevorzugt wird zu diesem Zweck die Position der parallelen Kanten in den zweidimensionalen Bildern bestimmt und zusammen mit den Disparitäts- und/oder Entfernungsinformationen abgespeichert. Mithilfe dieses Verfahrens lassen sich Kantenfehlzuordnungen auf ein Minimum reduzieren. Vorteilhafterweise werden in dem Konfigurationsmodus zumindest drei Referenzmarken verwendet, um die Disparitäten/Entfernungen zu den parallelen Kanten zu bestimmen. Des Weiteren ist es bevorzugt, wenn zumindest eine der Referenzmarken dauerhaft an der problematischen Struktur verbleibt, um mithilfe dieser Referenzmarke zu gewährleisten, dass die im Konfigurationsmodus bestimmten Disparitäten/Entfernungen auch im Überwachungsbetrieb gültig sind. Es ist daher von Vorteil, wenn die problematischen Strukturen mit parallelen Kanten stationär sind und den überwachten Raumbereich begrenzen, da die parallelen Kanten in diesem Fall einen Hintergrund bilden, vor dem sich bewegliche Objekte im Überwachungsbetrieb bewegen. Die jeweilige Entfernung der bewegten Objekte muss zwangsläufig kleiner sein als die Entfernungen der parallelen Kanten im Hintergrund, was eine einfache Plausibilitätsprüfung ermöglicht. Mithilfe des neuen Verfahrens lässt sich der Rechenaufwand bei der Bestimmung von Disparitäten und Entfernungen an parallelen Kanten deutlich reduzieren. Außerdem lassen sich Fehlzuordnungen und daraus folgende Messfehler vermeiden.

**Patentansprüche**

1. Verfahren zum Überwachen eines Raumbereichs (33), der eine Struktur (46) mit einer Vielzahl von zumindest weitgehend parallelen Kanten (48) und eine Anzahl von beweglichen Objekten (38) aufweist, mit den Schritten:

- Bereitstellen einer ersten und einer zweiten Bildaufnahmeeinheit (16, 18), die mit einem definierten Abstand (b) zueinander angeordnet sind,
- Aufnehmen eines ersten Bildes (40) von dem Raumbereich (33) mit der ersten Bildaufnahmeeinheit (16) und Aufnehmen eines zweiten Bildes (50) von dem Raumbereich (33) mit der zweiten Bildaufnahmeeinheit (18),
- Bestimmen einer Anzahl von Objektpositionen anhand des ersten und des zweiten Bildes (40, 50), wobei jede Objektposition eine räumliche Entfernung eines Objekts (38, 42, 44) relativ zu den Bildaufnahmeeinheiten (16, 18) repräsentiert, und
- Erzeugen eines Schaltsignals (22) in Abhängigkeit von den Objektpositionen, **dadurch gekennzeichnet, dass** an der Struktur (46) eine Anzahl von definierten Referenzmarken (56) angeordnet wird, dass eine Anzahl von Referenzentfernungen zwischen den Bildaufnahmeeinheiten (16, 18) und den Referenzmarken (56) bestimmt wird, und dass eine Strukturposition der Struktur (46) anhand der Referenzentfernungen bestimmt wird.

2.  Verfahren nach Anspruch 1, **dadurch gekennzeichnet, dass** an der Struktur (46) zumindest drei Referenzmarken (56) angeordnet werden, die eine virtuelle Referenzfläche (58) aufspannen, wobei die virtuelle Referenzfläche (58) die Vielzahl der parallelen Kanten (48) zumindest weitgehend überlagert.

3.  Verfahren nach Anspruch 2, **dadurch gekennzeichnet, dass** für zumindest eine der parallelen Kanten (48) eine Kantenentfernung relativ zu den Bildaufnahmeeinheiten (16, 18) anhand des ersten und des zweiten Bildes (40, 50) sowie anhand der virtuellen Referenzfläche (58) bestimmt wird.

4.  Verfahren nach Anspruch 3, **dadurch gekennzeichnet, dass** für die zumindest eine Kante (48) eine Kantenposition innerhalb des ersten und/oder zweiten Bildes (40, 50) bestimmt und dauerhaft gespeichert wird.

5.  Verfahren nach Anspruch 3 oder 4, **dadurch gekennzeichnet, dass** die Kantenentfernung für die zumindest eine Kante (48) dauerhaft gespeichert wird.

6.  Verfahren nach Anspruch 5, **dadurch gekennzeichnet, dass** das erste und zweite Bild (40, 50) zyklisch wiederholt aufgenommen werden, und dass die Objektpositionen zyklisch wiederholt bestimmt werden, wobei die Strukturpo-sition in jedem Zyklus anhand der gespeicherten Kantenentfernung bestimmt wird.

7.  Verfahren nach einem der Ansprüche 1 bis 6, **dadurch gekennzeichnet, dass** zumindest eine der Referenzmarken (56) dauerhaft an der Struktur (46) verbleibt.

8.  Verfahren nach einem der Ansprüche 1 bis 7, **dadurch gekennzeichnet, dass** die Objektposition eines beweglichen Objekts (38, 42) mittels einer Plausibilitätsprüfung anhand der Strukturposition der Struktur (46) verifiziert wird, wobei geprüft wird, ob die gemessene Objektposition des beweglichen Objekts (38, 42) innerhalb des verfügbaren Raumbereichs liegt.

9.  Verfahren nach einem der Ansprüche 1 bis 8, **dadurch gekennzeichnet, dass** die Struktur (46) räumlich stationär ist.

10. Vorrichtung zum Überwachen eines Raumbereichs (33), der eine Struktur (46) mit einer Vielzahl von zumindest weitgehend parallelen Kanten (48) und eine Anzahl von beweglichen Objekten (38) aufweist, mit einer ersten Bildaufnahmeeinheit (16) zum Aufnehmen eines ersten Bildes (40) von dem Raumbereich (33) und mit einer zweiten Bildaufnahmeeinheit (18) zum Aufnehmen eines zweiten Bildes (50) von dem Raumbereich (33), wobei die erste und die zweite Bildaufnahmeeinheit (16, 18) mit einem definierten Abstand (b) zueinander angeordnet sind, und mit einer Auswerte- und Steuereinheit (20), die dazu ausgebildet ist, eine Anzahl von Objektpositionen anhand des ersten und des zweiten Bildes (40, 50) zu bestimmen und in Abhängigkeit von den Objektpositionen ein Schaltsignal (22) zu erzeugen, wobei jede Objektposition eine räumliche Entfernung eines Objekts (38, 42,44) relativ zu den Bildaufnahmeeinheiten (16, 18) repräsentiert, **dadurch gekennzeichnet, dass** die Auswerte- und Steuereinheit (20) ferner dazu ausgebildet ist, eine Strukturposition der Struktur (46) anhand einer Anzahl von Referenzentfernungen zwischen den Bildaufnahmeeinheiten (16, 18) und definierten Referenzmarken (56) zu bestimmen, die an der Struktur (46) angeordnet sind.

11. Computerprogramm mit Programmcode, der dazu ausgebildet ist, ein Verfahren nach einem der Ansprüche 1 bis 9 in seiner Gesamtheit auszuführen, wenn der Programmcode in einer Auswerte- und Steuereinheit einer Vorrichtung nach Anspruch 10 ausgeführt wird.

**Claims**

1. A method for monitoring a spatial region (33) comprising a structure (46) having a plurality of at least substantially parallel edges (48) and having a number of movable objects (38), the method comprising the steps of

   - providing a first and a second image recording unit (16, 18), which are arranged at a defined distance (b) from one another,
   - recording a first image (40) of the spatial region (33) by means of the first image recording unit (16) and recording a second image (50) of the spatial region (33) by means of the second image recording unit (18),
   - determining a number of object positions on the basis of the first and second images (40, 50), wherein each object position represents a spatial distance of an object (38, 42, 44) relative to the image recording units (16, 18), and
   - generating a switching signal (22) in a manner dependent on the object positions,
   **characterized in that** a number of defined reference marks (56) is arranged at the structure (46), wherein a number of reference distances between the image recording units (16, 18) and the reference marks (56) is determined, and wherein a structure position of the structure (46) is determined on the basis of the reference distances.

2. The method of claim 1, **characterized in that** at least three reference marks (56) defining a virtual reference area (58) are arranged at the structure (46), wherein the virtual reference area (58) at least substantially overlays the plurality of parallel edges (48).

3. The method of claim 2, **characterized in that**, for at least one of the parallel edges (48), an edge distance relative to the image recording units (16, 18) is determined on the basis of the first and second images (40, 50), and also on the basis of the virtual reference area (58).

4. The method of claim 3, **characterized in that**, for the at least one edge (48), an edge position within the first and/or second image (40, 50) is determined and permanently stored.

5. The method of claim 3 or 4, **characterized in that** the edge distance for the at least one edge (48) is permanently stored.

6. The method of claim 5, **characterized in that** the first and second images (40, 50) are repeatedly recorded, and the object positions are repeatedly determined, wherein the structure position is determined on the basis of the stored edge distance in each cycle.

7. The method of any of claims 1 to 6, **characterized in that** at least one of the reference marks (56) remains permanently at the structure (46).

8. The method of any of claims 1 to 7, **characterized in that** the object position of a movable object (38, 42) is verified with a plausibility check on the basis of the structure position of the structure (46), wherein the plausibility check takes place to check whether the measured object position of a detected movable object (38, 42) lies within the available spatial region.

9. The method of any of claims 1 to 8, **characterized in that** the structure (46) is spatially stationary.

10. A device for monitoring a spatial region (33) comprising a structure (46) having a plurality of at least substantially parallel edges (48) and having a number of movable objects (38), the device comprising a first image recording unit (16) for recording a first image (40) of the spatial region (33), and a second image recording unit (18) for recording a second image (50) of the spatial region (33), wherein the first and second image recording units (16, 18) are arranged at a defined distance (b) from one another, and comprising an evaluation and control unit (20) designed to determine a number of object positions on the basis of the first and second images (40, 50) and to generate a switching signal (22) in a manner dependent on the object positions, wherein each object position represents a spatial distance of an object (38, 42, 44) relative to the image recording units (16, 18), **characterized in that** the evaluation and control unit (20) is further designed to determine a structure position of the structure (46) on the basis of a number of reference distances between the image recording units (16, 18) and defined reference marks (56) arranged at the structure (46).

11. A computer program comprising program code designed to perform a method according to any of claims 1 to 9 in its entirety, if the program code is executed in an evaluation and control unit of a device of claim 10.

**Revendications**

1. Procédé de surveillance d'une zone dans l'espace (33) comportant une structure (46) dotée d'une pluralité d'arêtes (48) au moins largement parallèles et un nombre d'objets mobiles (38), avec les étapes suivantes :

   - mise à disposition d'une première et d'une deuxième unité d'enregistrement d'image (16, 18) disposées à une certaine distance (b) définie l'une par rapport à l'autre ;

- prise d'une première image (40) depuis la zone dans l'espace (33) à l'aide de la première unité d'enregistrement d'image (16) et prise d'une deuxième image (50) à partir de la zone dans l'espace (33) à l'aide de la deuxième unité d'enregistrement d'image (18) ;

- détermination d'un nombre de positions d'objet à l'aide de la première et de la deuxième image (40, 50), chaque position d'objet représentant un éloignement dans l'espace d'un objet (38, 42, 44) par rapport aux unités d'enregistrement d'image (16, 18) ; et

- production d'un signal de connexion (22) en fonction des positions d'objet ;

**caractérisé en ce qu'**un nombre de repères de référence (56) définis est disposé au niveau de la structure (46), qu'un nombre de distances de référence est défini entre les unités d'enregistrement d'image (16, 18) et les repères de référence (56) et qu'une position de structure de la structure (46) est définie à l'aide des distances de référence.

2. Procédé selon la revendication 1, **caractérisé en ce qu'**au moins trois repères de référence (56) sont disposés au niveau de la structure (46), lesdits repères formant une surface de référence (58) virtuelle, la surface de référence virtuelle (58) se superposant au moins largement sur la pluralité des arêtes parallèles (48).

3. Procédé selon la revendication 2, **caractérisé en ce qu'**une distance d'arête est définie par rapport aux unités d'enregistrement d'image (16, 18) pour au moins une des arêtes parallèles (48), à l'aide de la première et de la deuxième image (40, 50) ainsi qu'à l'aide de la surface de référence (58) virtuelle.

4. Procédé selon la revendication 3, **caractérisé en ce que** pour l'au moins une arête (48), une position d'arête est définie à l'intérieur de la première et/ou de la deuxième image (40, 50) et mémorisée de façon durable.

5. Procédé selon la revendication 3 ou 4, **caractérisé en ce que** la distance d'arête est mémorisée de façon durable pour l'au moins une arête (48).

6. Procédé selon la revendication 5, **caractérisé en ce que** la première et la deuxième image (40, 50) sont enregistrées cycliquement de façon répétée et que les positions d'objet sont définies cycliquement de façon répétée, la position de structure étant définie lors de chaque cycle à l'aide de la distance d'arête mémorisée.

7. Procédé selon l'une quelconque des revendications 1 à 6, **caractérisé en ce qu'**au moins un des repères de référence (56) persiste durablement au niveau de la structure (46).

8. Procédé selon l'une quelconque des revendications 1 à 7, **caractérisé en ce que** la position d'objet d'un objet (38, 42) mobile est vérifiée à l'aide d'un contrôle de plausibilité réalisé à l'aide de la position de structure de la structure (46), le contrôle permettant de vérifier si la position d'objet mesurée de l'objet (38, 42) mobile se trouve à l'intérieur de la zone dans l'espace disponible.

9. Procédé selon l'une quelconque des revendications 1 à 8, **caractérisé en ce que** la structure (46) est fixe dans l'espace.

10. Dispositif de surveillance d'une zone dans l'espace (33) comportant une structure (46) dotée d'une pluralité d'arêtes (48) au moins largement parallèles et un nombre d'objets mobiles (38), avec une première unité d'enregistrement d'image (16) permettant de prendre une première image (40) de la zone dans l'espace (33) et avec une deuxième unité d'enregistrement d'image (18) permettant de prendre une deuxième image (50) de la zone dans l'espace (33), la première et la deuxième unité d'enregistrement d'image (16, 18) étant disposées à une certaine distance (b) définie l'une par rapport à l'autre, et avec une unité d'analyse et de commande (20) conçue pour déterminer un nombre de positions d'objet à l'aide de la première et de la deuxième image (40, 50) et produire un signal de connexion (22) en fonction des positions d'objet, chaque position d'objet représentant un éloignement dans l'espace d'un objet (38, 42, 44) par rapport aux unités d'enregistrement d'image (16, 18), **caractérisé en ce que** l'unité d'analyse et de commande (20) est en outre conçue pour déterminer une position de structure de la structure (46) à l'aide d'un nombre de distances de référence entre les unités d'enregistrement d'image (16, 18) et les repères de référence (56) définis disposés au niveau de la structure (46).

11. Programme informatique doté d'un code de programmation conçu pour exécuter un procédé selon l'une quelconque des revendications 1 à 9 dans sa totalité lorsque le code de programmation est exécuté dans une unité d'analyse et de commande d'un dispositif selon la revendication 10.

Fig.1

Fig.2

Fig.3

Fig.4

Fig.5

Fig.6

```
                              ┌─────────┐
                              │  Start  │
                              └─────────┘
                                   │
                  ┌────────────────┴────────────────┐
         ┌────────────────┐              ┌────────────────┐
    62   │    Bild #1     │              │    Bild #2     │   64
         └────────────────┘              └────────────────┘
                  └────────────────┬────────────────┘
                                   │
                  ┌────────────────────────────────┐
                  │      Disparitäten suchen        │   66
                  └────────────────────────────────┘
                                   │
                  ┌────────────────────────────────┐
                  │   Kantenstruktur identifizieren │   68
                  └────────────────────────────────┘
                                   │
                  ┌────────────────────────────────┐
                  │  Referenzmarken an Struktur     │   70
                  │            anordnen             │
                  └────────────────────────────────┘
                                   │
                  ┌────────────────┴────────────────┐
         ┌────────────────┐              ┌────────────────┐
    72   │    Bild #1'    │              │    Bild #2'    │   74
         └────────────────┘              └────────────────┘
                  └────────────────┬────────────────┘
                                   │
                  ┌────────────────────────────────┐
                  │   Referenzmarken identifizieren │   76
                  └────────────────────────────────┘
                                   │
                  ┌────────────────────────────────┐
                  │ Disparitäten der Referenzmarken │   78
                  │           bestimmen             │
                  └────────────────────────────────┘
                                   │
                  ┌────────────────────────────────┐
                  │  Disparitäten der Kanten        │   80
                  │         bestimmen               │
                  └────────────────────────────────┘
                                   │
                  ┌────────────────────────────────┐
                  │  Disparitäten der Kanten        │   82
                  │         speichern               │
                  └────────────────────────────────┘
                                   │
                  ┌────────────────────────────────┐
                  │  Bildposition der Kanten und    │   84
                  │   Referenzmarken speichern      │
                  └────────────────────────────────┘
                                   │
                  ┌────────────────────────────────┐
                  │    Schutzräume konfigurieren    │   86
                  └────────────────────────────────┘
                                   │
                              ┌─────────┐
                              │  Stopp  │
                              └─────────┘
```

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007085330 A1
- EP 1543270 B1
- DE 102005063217 A1
- WO 2008098831 A1